**Europäisches Patentamt**

**European Patent Office**

**Office européen des brevets**

(19)

(11) Publication number: **0 204 397**

**A1**

(12) # EUROPEAN PATENT APPLICATION

(21) Application number: **86302237.2**

(22) Date of filing: **26.03.86**

(51) Int. Cl.⁴: **F 16 D 33/16**

(30) Priority: **27.03.85 GB 8508035**

(43) Date of publication of application:
**10.12.86 Bulletin 86/50**

(84) Designated Contracting States:
**DE FR IT**

(71) Applicant: **Lambert, Frederick George**
**Brays Farm Cottage**
**Dalwood Axminster Devon EX13 7HG(GB)**

(72) Inventor: **Lambert, Frederick George**
**Brays Farm Cottage**
**Dalwood Axminster Devon EX13 7HG(GB)**

(54) **Variable speed fluid coupling.**

(57) A fluid coupling, e.g. a variable speed fluid coupling has a primary rotor (1) and secondary rotor (2) which are free to rotate independently of each other within a housing (7). The primary rotor (1) together with the housing (7) are adapted to pump fluid from the housing (7) through channel (15) to a reservoir (10) and from reservoir (10) to the working circuit between rotors (1 and 2) via channel (14) and feed ports (20). The fluid holding capacity of the reservoir (10) can be varied and its contents transfered in full or in part to the working circuitry of the rotors (1 and 2). When charged with fluid rotors (1 and 2) produce a hydro-kinetic coupling of variable output speed determined by the amount of fluid circulating between them and apportioned by the volumetric displacement of fluid from the reservoir (10). Where no displacement of fluid from reservoir (10) occurs and no fluid is introduced to the working circuit of the rotors (1 and 2) a neutral coupling condition exists. A fluid pressure sensitive valve (16) acts under back pressure conditions caused by reducing the volumetric capacity of the reservoir (10) and diverts fluid under pumped influence through channel (17) to the working circuit of rotors (1 and 2).

FIGURE 1

FIGURE 3

EP 0 204 397 A1

VARIABLE SPEED FLUID COUPLING.                    0204397

This invention relates to a variable speed fluid coupling.

Fluid couplings are used for transmitting torque from a prime mover, such as an electric motor, to a driven machine. Two types of fluid couplings are in common usage, one providing a constant output speed based upon a constant liquid filling and another providing a variable output speed based upon a variable liquid filling. A common feature of variable speed fluid couplings is a scoop tube metering device which is immersed into the rotating liquid within the housing of the fluid coupling and controls the volume of liquid circulating within the working parts of the fluid coupling.

The variation of ratio of the input and output speeds of the scoop tube controlled fluid coupling is related to the volume of liquid circulating within its working parts and is determined by the depth of immersion of the scoop tube metering device.

According to the present invention there is provided a variable speed fluid coupling comprising primary and secondary rotors with radially located vanes, means embodied within the primary rotor to provide a secondary pump action, a housing capable of containing a liquid filling and adapted to provide a secondary pump action, a reservoir independent of or attached to the housing and connected to the housing by pipes or channels and being part of a secondary pumped circuit, the reservoir having means for varying its volumetric capacity, a pressure operated liquid flow bypass and check valve located in or adjacent the return pipe or channel to the reservoir.

A specific embodiment of the invention will now be described by way of example with reference to the accompanying drawing in which:-

Figure 1 shows a cross sectioned view of the variable speed fluid coupling, reservoir with means for varying its volumetric capacity, pipes connecting the reservoir and the housing of the coupling, bypass pipe and fluid bypass flow and check valve.

Figure 2 illustrates the means embodied within the primary rotor for providing a secondary pump circuit, a catchment and feed ports.

Figure 3 shows part of the housing adapted to provide a secondary pump circuit.

Figure 4 shows the disposition of fluid within the coupling in a neutral or no drive position.

Figure 5 shows the disposition and flow of fluid within the coupling in a partially driven position.

Figure 6 illustrates the disposition and flow of fluid in a normal operating position.

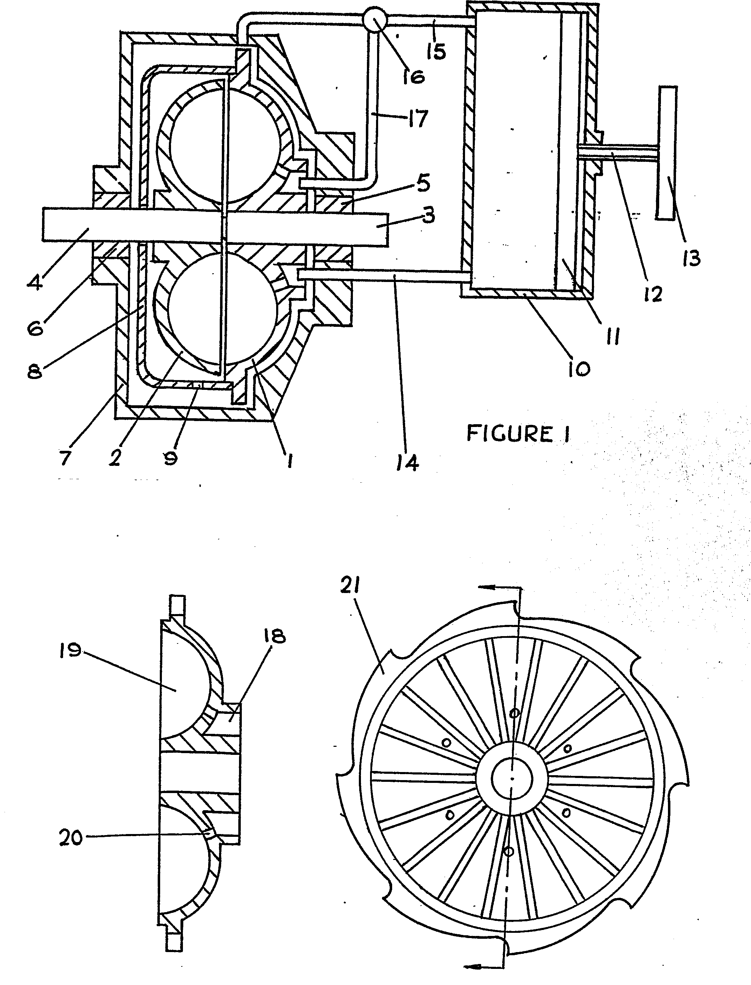

Referring to the drawing Fig.1. the variable speed fluid coupling comprises a primary or input rotor with radial vanes 1 and a secondary output rotor with radial vanes 2, both the primary and secondary rotors are attached to shafts 3 and 4 respectively, the shafts are supported by bearings 5 and 6 within a housing 7. The primary rotor 1 and shaft 3 are free to rotate in bearing 5 freely and independently of rotor 2 and shaft 4 which are free to rotate in bearing 6. Attached to rotor 1 is a drum 8 in which there is a bleed hole 9. A reservoir 10 equipped with means to vary the volumetric capacity such as a piston 11 connected to a screw thread 12 and a hand wheel 13. Connecting reservoir 10 to housing 7 is a supply pipe 14 and a return pipe 15. Located in the return pipe 15 is a fluid flow bypass and check valve 16, a bypass pipe 17 connects valve 16 to housing 7.

- 3 -

0204397

A prime mover such as an electric motor when connected to shaft 3 and operated would drive the primary input rotor 1. With reservoir 10 fully charged with a suitable fluid such as a mineral oil having a viscosity corresponding to SAE 5 to 10 and the working circuit between rotors 1 and 2 empty the secondary or output rotor 2 and shaft 4 remain stationary.

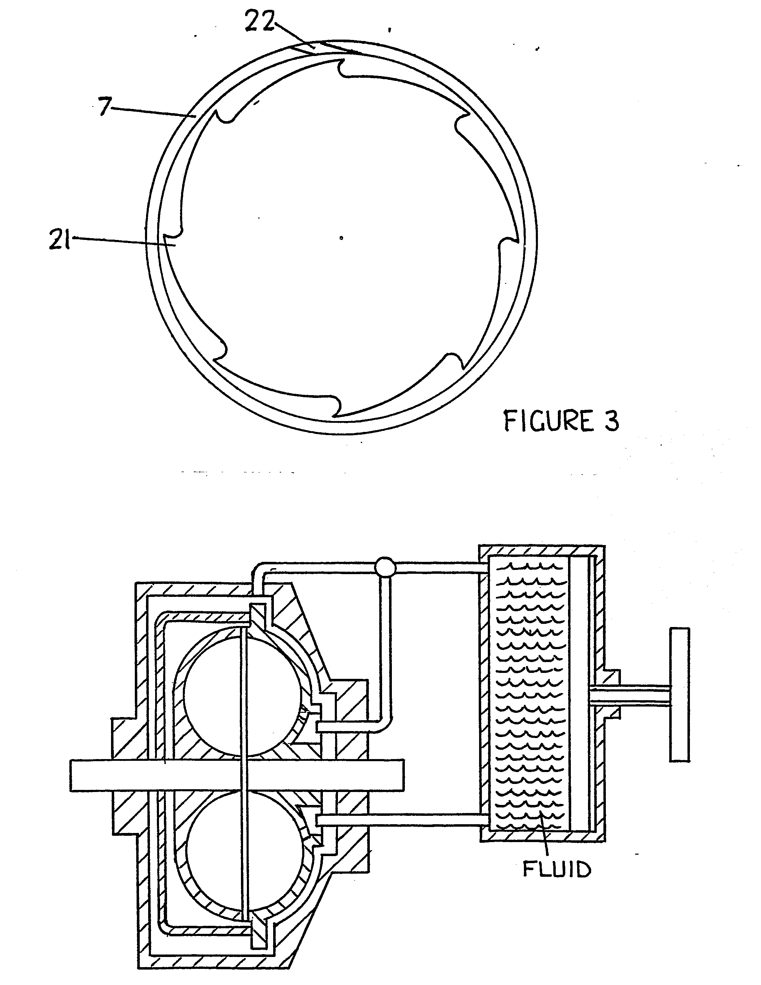

In order to operate the coupling fluid is introduced to the working circuit of rotors 1 and 2 by displacing fluid from reservoir 10. Rotation of handwheel 13 and screw thread 12 moves piston 11 forward thus reducing the volumetric capacity of the reservoir and displacing fluid from the reservoir and transferring it to housing 7 through supply pipe 14. A pressure operated fluid flow bypass and check valve 16 reacts under hydraulic pressure from the direction of the reservoir and prevents the flow of fluid through return pipe 15. Fluid flowing through the supply pipe 14 emmerges into a catchment 18 formed at the rear of the primary or input rotor, as shown in Fig.2. and transferred to the radially vaned working circuit 19 of the primary or input rotor through feed ports 20. The fluid within the working circuit of the primary or input rotor is thrown radially outwards by the rotation of the rotor and charged with kinetic energy. The dished form of the primary rotor directs the kinetically charged fluid onto the secondary or output rotor 2 which absorbs the kinetic energy converting it to torque and rotates. The dished profile of the secondary or output rotor redirects the fluid onto the primary or input rotor causing the fluid to recirculate between both rotors. With the minimum amount of fluid recirculating between the input and output rotors a high level of slip is present with the input rotor rotating faster than the output rotor. With further displacement of fluid from the reservoir and an increased volume of fluid recirculating between the two rotors the slip ratio of the rotors decreases. A percentage of fluid recirculating between the input and output rotors escapes through a gap between the mating faces of the rotors, this fluid is partially trapped by drum 8 which is rotating at the same speed as the input rotor. A bleed hole 9 in the drum permits fluid to escape from the drum and be depositated in the space between the drum and housing 7, impeller 21 which rotates at the same speed as the input rotor collects the fluid contained within the space between the drum and the housing and by centrifugal pumping action created by the form of impeller 21 and an outlet 22 in the housing pushes the fluid along bypass pipe 17 into housing 7 and the catchment at the rear of the input rotor and into the working circuit of the input and output rotors. When a required output speed is attained and further displacement of fluid from the reservoir no longer necessary the hydraulic pressure in the reservoir caused by the process of displacement ceases allowing the fluid flow bypass and check valve to assume a normal operating position. In its normal operating position the bypass and check valve closes the bypass pipe 17 thus preventing fluid entering the housing 7 and allows fluid in the space between the drum and housing and subject to pump action from impeller 21 to return to the reservoir through pipe 15 and pass through the reservoir into feed pipe 14 and back into the working circuit of the two rotors. This process establishes a secondary circuit distinct and separate from the primary hydro-kinetic circuit created by the circuitry of the input and output rotors. The secondary circuit maintaines the volume of fluid in total circulation of the variable speed coupling.

**0204397**

CLAIMS.

(1) A variable speed fluid coupling comprising primary and secondary rotors with radially located vanes, means embodied within the primary rotor to provide a secondary pump action, a housing capable of containing a liquid filling and adapted to provide a secondary pump action, a reservoir independent of or attached to the housing and connected to the housing by pipes or channels and being part of a secondary pumped circuit, the reservoir having means for varying its volumetric capacity, a pressure operated liquid flow bypass and check valve located in or adjacent the return pipe or channel to the reservoir.

(2) A variable speed fluid coupling as claimed in Claim 1 wherein means is embodied within the primary or input rotor to provide a pump action.

(3) A variable speed fluid coupling as claimed in Claim 1 or Claim 2, wherein pump means is adapted in the housing co-operable with the primary or input rotor to evacuate fluid from the housing.

(4) A variable speed fluid coupling as claimed in Claim 1, Claim 2 or Claim 3, wherein a reservoir is provided capable of containing fluid and with means for varying its volumetric capacity.

(5) A variable speed fluid coupling as claimed in Claim 3 or Claim 4, wherein fluid displaced from the reservoir is transferred to the working circuit of the primary and secondary rotors as claimed in Claim 1.

(6) A variable speed fluid coupling as claimed in any preceding Claim wherein valve means is provided to divert fluid evacuated from the housing back to the housing or be directed to the reservoir.

(7) A variable speed fluid coupling as claimed in Claim 6 wherein fluid is apportioned by controlled means to the working circuit of the primary and secondary rotors for determining the ratio of rotational speed of the primary and secondary rotors.

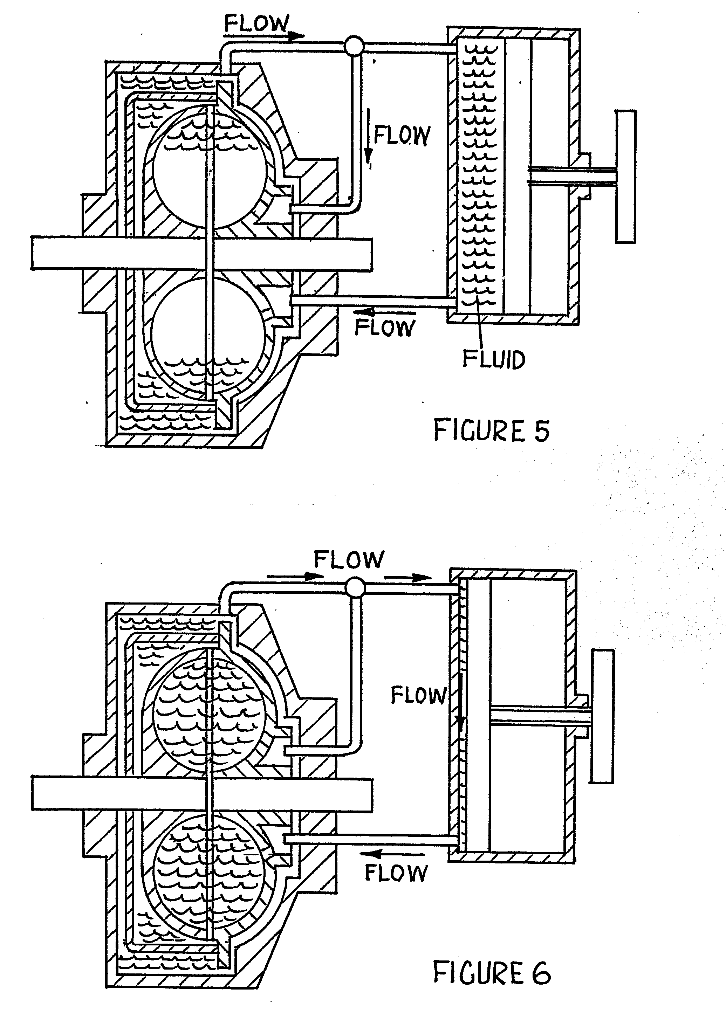

(8) A variable speed fluid coupling substantially as described herein with reference to Figures 1 - 6 of the accompanying drawing.

FIGURE 1

FIGURE 2

22

7

21

FIGURE 3

FLUID

FIGURE 4

FLOW

FLOW

FLOW

FLUID

FIGURE 5

FLOW

FLOW

FLOW

FIGURE 6

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-2 110 454 (SINCLAIR)<br>* Pages 1,2; figures * | 1-8 | F 16 D 33/16 |
| A | FR-A-2 276 516 (FERODO)<br>* Whole document * | 1-8 | |

**TECHNICAL FIELDS SEARCHED (Int. Cl.4)**

F 16 D
F 16 H

The present search report has been drawn up for all claims

| Place of search | Date of completion of the search | Examiner |
|---|---|---|
| THE HAGUE | 09-06-1986 | FLORES E. |